# EUROPÄISCHE PATENTSCHRIFT

(11) **EP 0 449 056 B1**
(45) Veröffentlichungstag und Bekanntmachung des Hinweises auf die Patenterteilung: **29.05.1996**
(21) Anmeldenummer: 91104017.8
(22) Anmeldetag: 15.03.1991
(51) Int. Cl.: B60R 1/06

(54) **Aussenspiegel für Nutzfahrzeuge**
Exterior mirror for lorries
Rétroviseur extérieur pour véhicules poids lourds

(30) Priorität: 29.03.1990 DE 4010083
(43) Veröffentlichungstag der Anmeldung: 02.10.1991
(73) Patentinhaber: MEKRA Rangau Plastics GmbH & Co KG, D-90765 Fürth (DE)
(72) Erfinder: Lang, Heinrich, W-8531 Ergersheim (DE); Seiboth, Wolfgang, W-8532 Bad Windsheim (DE)
(74) Vertreter: Rau, Manfred, Dr. Dipl.-Ing.

(56) Entgegenhaltungen:
- EP-A- 0 352 762
- DE-A- 3 226 435
- FR-A- 2 622 521
- US-A- 3 788 734
- US-A- 4 701 037
- US-A- 4 809 137

## Beschreibung

Die Erfindung betrifft einen Außenspiegel für Nutzfahrzeuge nach dem Oberbegriff des Anspruches 1. Ein solcher Außenspiegel ist schon aus dem Dokument US-A-4 701 037 bekannt.

Derartige in der Regel sehr große Außenspiegel für Nutzfahrzeuge sind dem Fahrtwind ausgesetzt, wodurch die Benutzung des Spiegels stark erschwert wird, und zwar insbesondere wenn die jeweilige Spiedelscheibe Vibrationen ausgesetzt ist. Aus dem Dokument FR-A-2 622 521 ist ein Nutzfahrzeug bekannt, wobei mehrere getrennte Außenspiegel mit entsprechenden Gehäusern auf einer Haltevorrichtung angebracht sind.

Der Erfindung liegt die Aufgabe zugrunde, einen Aussenspiegel für Nutzfahrzeuge der gattungsgemäßen Art so auszugestalten, daß die Vibrationsgefahr möglichst weitgehend reduziert wird.

Diese Aufgabe wird erfindungsgemäß durch die Merkmale im Kennzeichnungsteil des Anspruches 1 gelöst. Dadurch daß zwei Spiegelscheiben direkt über ein Verstellaggregat mit einer Trägerplatte verbunden sind, die wiederum direkt mit einer am Halter angebrachten Haltevorrichtung verbunden ist, können keinerlei Vibrationen vom Gehäuse des Spiegels her auf die Spiegelscheibe übertragen werden. Dem Gehäuse kommt somit nur noch die Funktion einer aerodynamisch günstigen Verkleidung des Spiegels selber zu, aber keinerlei tragende Funktion. Diese wird von der Trägerplatte vollständig übernommen. Wenn hinsichtlich des Anwendungsgebietes der Spiegel von Nutzfahrzeugen gesprochen wird, dann gilt dies an erster Stelle für Lastkraftwagen und Omnibusse oder dergleichen.

Die erfindungsgemäßen Maßnahmen erlauben es zwei Spiegelscheiben vorzusehen, von denen die eine in der Regel größere Spiegelscheibe als normaler Rückblickspiegel dient, während die kleinere Spiegelscheibe als Weitwinkelspiegel für einen größeren Rundumblick dient. Der Anspruch 1 gibt hierzu an, wie ohne Änderung von Teilen ein Austauschen der unterschiedlichen Spiegel, d. h. deren unterschiedliche Anordnung, möglich ist.

Wenn dem Gehäuse keine tragenden Funktionen zukommen, dann kann es besonders dünnwandig ausgebildet sein. In diesem Falle ist es aus herstellungstechnischen und aerodynamischen Gründen und aus Gründen der Betriebssicherheit von besonderem Vorteil, wenn durch die Weiterbildung nach Anspruch 2 sichergestellt ist, daß trotz der Verstellbarkeit der Spiegelscheiben relativ zum Gehäuse dessen Innenraum möglichst dicht abgeschlossen ist. Eine besonders günstige weitere Ausgestaltung gibt hierzu Anspruch 3 an.

Das lediglich als aerodynamisch günstige Verkleidung und stilistisches Element eingesetzte Gehäuse kann zweckmäßigerweise nach Anspruch 4 mit der Trägerplatte verbunden sein, wobei die Weiterbildung nach Anspruch 5 zusätzlich Montagemittel zur Befestigung des Gehäuses an der Trägerplatte überflüssig macht. Diese Ausgestaltung nach Anspruch 5 ermöglicht auch die weiteren vorteilhaften Maßnahmen nach Anspruch 6 und Anspruch 7, wodurch zum einen die Haltevorrichtung optisch weitgehend verschwindet und zum anderen aerodynamisch besonders günstig ausgestaltet wird.

Die Verstellaggregate sind in der Regel elektromotorisch ausgebildet; sie können aber auch lediglich so ausgebildet sein, daß eine Verschwenkung der Spiegelscheiben von Hand möglich ist. Beide Arten von Verstellaggregaten sind bekannt und handelsüblich.

Die Erfindung ergibt sich aus der nachfolgenden Beschreibung von Ausführungsbeispielen anhand der Zeichnung.
Es zeigt
- Fig. 1: einen Außenspiegel gemäß der Erfindung in Draufsicht,
- Fig. 2: eine Seitenansicht des Spiegels nach Figur 1 ohne Haltearm,
- Fig. 3: einen Querschnitt durch den Spiegel nach den Figuren 1 und 2 im Bereich der größeren unteren Spiegelscheibe,
- Fig. 4: einen Querschnitt durch den Spiegel nach den Figuren 1 und 2 im Bereich der kleineren oberen Spiegelscheibe und
- Fig. 5: einen Außenspiegel ohne Haltearm mit nur einer Spiegelscheibe in Seitenansicht.

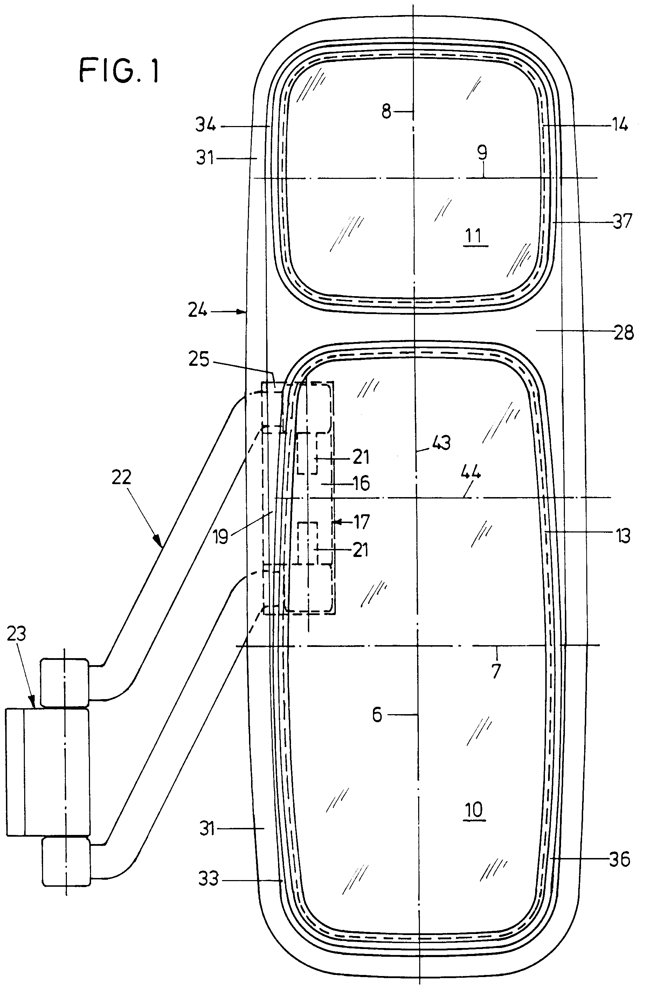

Der in den Figuren 1 bis 4 dargestellte Außenspiegel für ein Nutzfahrzeug ist als Doppelspiegel ausgebildet. Er weist eine Trägerplatte 1 als zentrales tragendes Element auf. Auf dieser Trägerplatte 1 sind zwei Verstellaggregate 2, 3 angebracht, die bekannt und handelsüblich sind. Es handelt sich hierbei um Verstellaggregate, die Zwei elektrische Getriebemotoren enthalten, mittels derer eine am Verstellaggregat 2 bzw. 3 angebrachte Spiegel-Tragplatte 4 bzw. 5 um zwei zueinander senkrechte Verstellachsen 6, 7 bzw. 8, 9 verstellt werden können, um eine Einstellung der auf der jeweiligen Spiegel-Tragplatte 4 bzw. 5 angebrachten Spiegelscheibe 10 bzw. 11 durchzuführen. Anstelle solcher elektrischen Verstellaggregate 2, 3 können auch manuell verstellbare Einheiten vorgesehen sein, die ebenfalls bekannt und handelsüblich sind, und bei denen die Verstellung um die Verstellachsen 6, 7 bzw. 8, 9 manuell durchgeführt wird.

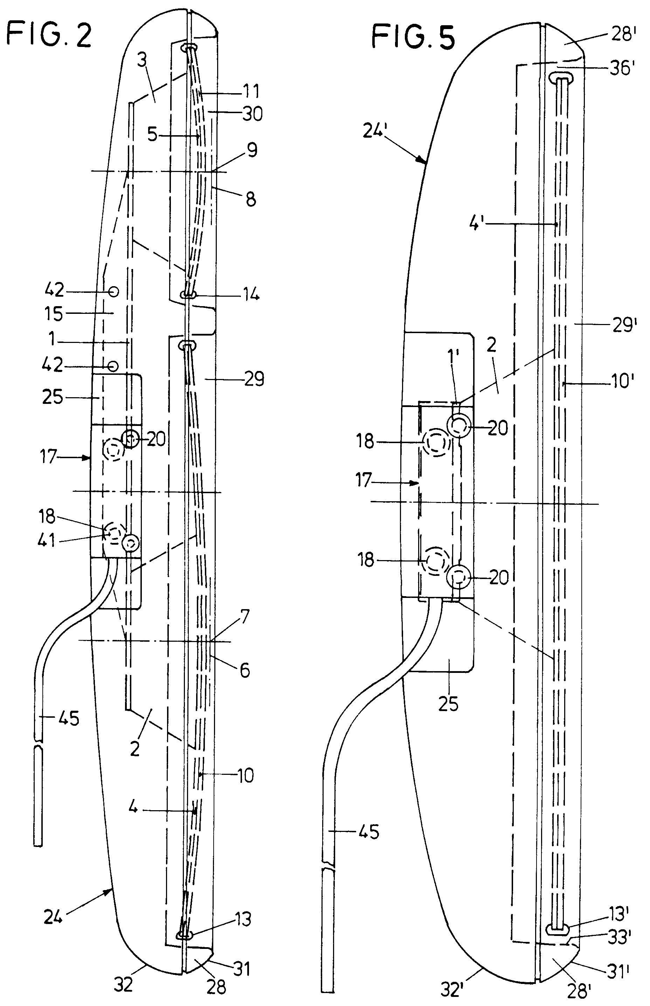

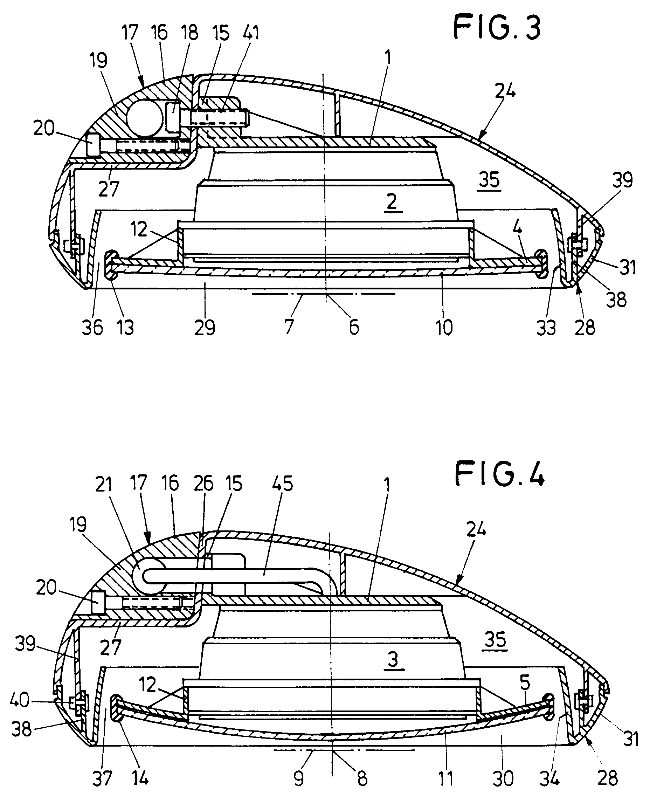

Die Spiegel-Tragplatten 4 bzw. 5 sind an den Verstellaggregaten 2 bzw. 3 mittels eines ringartigen Befestigungsrandes 12 durch Schrumpfen, Rasten, Kleben oder dergleichen befestigt. Die Spiegelscheiben 10, 11 sind auf den jeweiligen Spiegel-Tragplatten 4 bzw. 5 mittels eines elastischen Halterings 13, 14 gehalten, der die Randbereiche der jeweiligen Tragplatte 4 bzw. 5 und der jeweiligen Spiegelscheibe 10 bzw. 11 umgreift. Wie sich aus den Figuren 2 und 3 einerseits und 2 und 4 andererseits ergibt, sind die Spiegelscheiben 10, 11 konvex gekrümmt und weisen unterschiedliche Krümmungen auf. Die in Figur 2 obere kleinere Spiegelscheibe 11 ist stärker gekrümmt und erzeugt somit ein größeres Blickfeld als die schwächer gekrümmte größere untere Spiegelscheibe 10.

Die Trägerplatte 1 weist einen senkrecht von ihr hochstehenden Haltesteg 15 auf, an dem ein Widerlager 16 einer als Klemmvorrichtung 17 ausgebildeten Haltevorrichtung mittels zweier Schrauben 18 befestigt ist. Dem Widerlager 16 ist eine Klemmbacke 19 zugeordnet, die wiederum mittels zweier Klemmschrauben 20 am Widerlager 16 befestigbar ist. Die Klemmbacke 19 und das Widerlager 16 bilden die Klemmvorrichtung 17. Zwischen Widerlager 16 und Klemmbacke 19 werden zwei Schwenkzapfen 21 eines als Halter dienenden doppelarmigen Haltearms 22 gehalten, dessen anderes Ende an einem Lagerbock 23 gelagert ist, der wiederum am Führerhaus eines Nutzfahrzeuges befestigbar ist.

Der Spiegel weist ein Gehäuse 24 auf, dessen Querschnitt etwa dem eines Tragflügels entspricht. Dieses Gehäuse 24 weist im Bereich der Klemmvorrichtung 17 eine Einbuchtung 25 auf, deren Querschnitt dem Querschnitt der Klemmvorrichtung 17 angepaßt ist. Diese Einbuchtung 25 wird im Querschnitt durch eine der Richtung des Haltestegs 15 entsprechende Haltewand 26 und einen hierzu etwa senkrecht verlaufenden Wandabschnitt 27 begrenzt. Die Haltewand 26 liegt gegen den Haltesteg 15 an und ist zwischen diesem und dem Widerlager 16 mittels der Schrauben 18 eingeklemmt. Die Außenkontur der Klemmvorrichtung 17 ist - wie die Figuren 3 und 4 erkennen lassen - der Außenkontur des Gehäuses 24 angepaßt, d. h. die Klemmvorrichtung 17 ist aerodynamisch in die Außenkontur des Gehäuses 24 integriert. Das Gehäuse 24 ist auf seiner den Spiegelscheiben 10, 11 zugewandten Seite mittels eines Abdeck-Rahmens 28 abgedeckt, der die Spiegelscheiben 10 bzw. 11 aufnehmende Öffnungen 29, 30 aufweist. Der Rahmen 28 weist einen äußeren Wandabschnitt 31 auf, der in den Umfangsrand 32 des Gehäuses 24 eingreift und der nach innen, also zu den Spiegelscheiben 10, 11 hin gebogen ist. An diesen äußeren Wandabschnitt 31 schließt sich jeweils im Bereich jeder Öffnung 29, 30 ein innerer Wandabschnitt 33, 34 an, der in den Innenraum 35 des Gehäuses 24 hineinragt. Die jeweilige Kontur eines solchen Wandabschnitts 33 bzw. 34 ist - wie die Figuren 3 und 4 erkennen lassen - derart, daß zwischen dem inneren Wandabschnitt 33 und der zugeordneten Spiegelscheibe 10 und dem inneren Wandabschnitt 34 und der zugeordneten Spiegelscheibe 11 ein schmaler Spalt 36 bzw. 37 ausgebildet ist, so daß auch beim Verstellen der jeweiligen Spiegelscheibe 10 bzw. 11 um die Verstellachsen 6, 7 bzw. 8, 9 der Innenraum 35 weitgehend abgeschlossen ist, also nur der erwähnte Spalt 36 bzw. 37 frei ist. Dies schützt den Innenraum 35 des Gehäuses 24 und die in ihm befindlichen Verstellaggregate 2 bzw. 3 vor Verschmutzung. Außerdem führt dies zu aerodynamisch günstigen Verhältnissen. Wie die Figuren 3 und 4 erkennen lassen, ist der Abdeck-Rahmen 28 mittels Halteleisten 38 an räumlich entsprechend angeordneten und ausgestalteten Rippen 39 des Gehäuses 24 beispielsweise durch Nieten 40 befestigt.

Die Spiegel-Tragplatten 4, 5 mit den entsprechenden Spiegelscheiben 10, 11 können auch in umgekehrter Anordnung vorgesehen werden, d. h. daß in einem solchen Fall die stärker gekrümmte kleinere Spiegelscheibe 11 unten und die weniger stark gekrümmte größere Spiegelscheibe 10 oben angeordnet werden. Dies ist u. a. deshalb einfach möglich, weil die Verstellaggregate 2 und 3 identisch sind. Um dies ohne sonstige Änderung am Gehäuse 24 zu ermöglichen, wird die Trägerplatte 1 entsprechend tiefer angeordnet, wofür zusätzlich zu den die Schrauben 18 aufnehmenden Gewindelöchern 41 ein zusätzlicher Satz Gewindelöcher 42 weiter oben vorgesehen ist. In einem solchen Fall braucht bei der Montage der Abdeck-Rahmen 28 lediglich um 180° gedreht aufgesetzt zu werden. Dies ist deshalb in einfacher Weise möglich, weil das Gehäuse 24 - wie die Figur 1 erkennen läßt - im Bereich der Spiegelscheiben 10, 11 doppelt symmetrisch ausgebildet ist; es weist also eine Haupt-Symmetrieachse 43 und eine Neben-Symmetrieachse 44 auf mit der Folge, daß der Abdeck-Rahmen 28 um den Schnittpunkt der beiden Achsen 43, 44 in Figur 1 um 180° gedreht und dann ebenfalls mit dem Gehäuse 24 verbunden werden kann.

Wie die Figuren 2 und 4 erkennen lassen, wird eine mehradrige elektrische Leitung 45 durch die Klemmvorrichtung 17 in das Gehäuse 24 eingeführt. Über sie erfolgt die elektrische Versorgung der Verstellaggregate 2, 3, soweit diese elektrische Getriebemotoren enthalten, und die elektrische Versorgung von eventuell vorhandenen Heizungen der Spiegelscheiben 10, 12. Von außen wird diese elektrische Leitung 45 durch den Haltearm 22 zugeführt und über einen der hohl ausgebildeten Schwenkzapfen 21 in das Gehäuse 24 eingeführt.

Figur 5 zeigt einen Spiegel mit nur einer Spiegelscheibe 10'. Das Gehäuse 24' ist demzufolge nur für eine Spiegelscheibe 10' ausgebildet. Der Aufbau entspricht dem, wie er in Figur 3 dargestellt ist und wie er zu Figur 3 beschrieben ist, worauf insoweit verwiesen werden darf. Im Ausführungsbeispiel nach Figur 5 ist lediglich die Spiegelscheibe 10' nicht gekrümmt sondern ebenflächig dargestellt, worauf es im vorliegenden Fall aber nicht ankommt. Alle übrigen in Figur 5 sichtbaren Teile sind, soweit sie mit den in den Figuren 1 bis 4 kommenden Teilen identisch sind, mit identischen Bezugsziffern bezeichnet; soweit sie funktionell gleich, konstruktiv aber anders ausgestaltet sind, sind sie mit derselben Bezugsziffer bezeichnet, die aber mit einem hochgesetzten Strich versehen ist. Von einer erneuten Beschreibung kann also Abstand genommen werden.

## Patentansprüche

1. Außenspiegel für Nutzfahrzeuge, mit einem Gehäuse (24) und mit einer Haltevorrichtung (17) zur Befestigung eines Halters (22), wobei im Gehäuse (24, 24') eine Trägerplatte (1) vorgesehen ist, die direkt an der Haltevorrichtung (17) angebracht ist, dadurch gekennzeichnet, daß an der Trägerplatte (1) zwei Verstellaggregate (2, 3) angebracht sind, an denen wiederum zwei unterschiedliche Spiegelscheiben (10, 11) verschwenkbar im Gehäuse (24) angebracht sind, wobei das Gehäuse (24) eine Haupt-Symmetrieachse (43) und eine hierzu senkrecht verlaufende Neben-Symmetrieachse (44) aufweist und wobei die Trägerplatte (1) in zwei Stellungen mit dem Halter (17) verbindbar ist.

2. Außenspiegel nach Anspruch 1, dadurch gekennzeichnet, daß das Gehäuse (24) einen die mindestens eine Spiegelscheibe (10, 11) umgebenden Abdeck-Rahmen (28) aufweist, der einen einen Spalt (36, 37) zur Spiegelscheibe (10, 11) freilassenden inneren Wandabschnitt (33, 34) aufweist.

3. Außenspiegel nach Anspruch 2, dadurch gekennzeichnet, daß der innere Wandabschnitt (33, 34) eine dem Verschwenkweg des Randes der Spiegelscheibe (10, 11) angepaßte Form aufweist.

4. Außenspiegel nach einem der Ansprüche 1 bis 3, dadurch gekennzeichnet, daß das Gehäuse (24) mit der Trägerplatte (1) bzw. der Haltevorrichtung (17) bzw. dem Halter (22) verbunden ist.

5. Außenspiegel nach Anspruch 4, dadurch gekennzeichnet, daß das Gehäuse (24) zwischen der Haltevorrichtung (17) und der Trägerplatte (1) klemmend gehalten ist.

6. Außenspiegel nach einem der Ansprüche 1 bis 5, dadurch gekennzeichnet, daß die Haltevorrichtung (17) in einer Einbuchtung (25) des Gehäuses (24) angeordnet ist.

7. Außenspiegel nach Anspruch 6, dadurch gekennzeichnet, daß die Außenkontur der Haltevorrichtung (17) mit der Außenfläche des Gehäuses (24) fluchtet.

## Claims

1. An external rear-view mirror for commercial vehicles, comprising a housing (24) and a holding device (17) for fastening a holder (22), a support plate (1) being provided in the housing (24, 24') and being directly secured to the holding device (17), characterized in that two positioning aggregates (2, 3) are mounted on the support plate (1), to which positioning aggregates (2, 3), two different mirror glasses (10, 11) are in turn secured pivotably in the housing (24), the housing (24) having a main axis of symmetry (43) and a secondary axis of symmetry (44) extending at right angles to it, and the support plate (1) being connectable with the holder (17) in two positions.

2. An external rear-view mirror according to claim 1, characterized in that the housing (24) has a covering frame (28) surrounding the at least one mirror glass (10, 11) and having an internal wall section (33, 34) leaving a gap (36, 37) towards the mirror glass (10, 11).

3. An external rear-view mirror according to claim 2, characterized in that the internal wall section (33, 34) has a shape adapted to the pivot path of the edge of the mirror glass (10, 11).

4. An external rear-view mirror accoding to one of claims 1 to 3, characterized in that the housing (24) is connected with the support plate (1) or the holding device (17) or the holder (22), respectively.

5. An external rear-view mirror according to claim 4, characterized in that the housing (24) is clampingly held between the holding device (17) and the support plate (1).

6. An external rear-view mirror according to one of claims 1 to 5, characterized in that the holding device (17) is arranged in a recess (25) of the housing (24).

7. An external rear-view mirror according to claim 6, characterized in that the outside contour of the holding device (17) is in alignment with the external surface of the housing (24).

## Revendications

1. Rétroviseur extérieur pour véhicules utilitaires, comportant un carter (24) et un dispositif de support (17) destiné à la fixation d'un support (22), une plaque de support (1) étant prévue dans le carter (24) et rapportée directement sur le dispositif de support (17), caractérisé en ce que sur la plaque de support (1) sont montés deux ensembles de réglage (2, 3) sur lesquels sont à leur tour montés, de manière pivotante dans le carter (24), deux miroirs de rétroviseur différents (10, 11), le carter (24) présentant un axe de symétrie principal (43) et perpendiculairement à celui-ci, un axe de symétrie auxiliaire (44), et la plaque de support (1) pouvant être reliée dans deux positions au support (17).

2. Rétroviseur extérieur selon la revendication 1, caractérisé en ce que le carter (24) présente un cadre de recouvrement (28) entourant ledit au moins un miroir de rétroviseur (10, 11), et comportant un tronçon de paroi intérieur (33, 34) laissant subsister un interstice (36, 37) par rapport au miroir de rétroviseur (10, 11).

3. Rétroviseur extérieur selon la revendication 2, caractérisé en ce que le tronçon de paroi intérieur (33, 34) présente une forme adaptée au déplacement de pivotement du bord du miroir de rétroviseur (10, 11).

4. Rétroviseur extérieur selon l'une des revendications 1 à 3, caractérisé en ce que le carter (24) est relié respectivement à la plaque de support (1), au dispositif de support (17) et au support (22).

5. Rétroviseur extérieur selon la revendication 4, caractérisé en ce que le carter (24) est maintenu par serrage entre le dispositif de support (17) et la plaque de support (1).

6. Rétroviseur selon l'une des revendications 1 à 5, caractérisé en ce que le dispositif de support (17) est disposé dans un renfoncement (25) du carter (24).

7. Rétroviseur selon la revendication 6, caractérisé en ce que le contour extérieur du dispositif de support (17) s'aligne sur la surface extérieure du carter (24).
